# EUROPÄISCHE PATENTSCHRIFT

(11) **EP 0 273 406 B1**
(45) Veröffentlichungstag und Bekanntmachung des Hinweises auf die Patenterteilung: **31.03.1993**
(21) Anmeldenummer: 87119180.5
(22) Anmeldetag: 24.12.1987
(51) Int. Cl.: F26B 3/08, F26B 23/00

(54) **Verfahren und Anlage zum Trocknen von Rohbraunkohle in einem Wirbelbett-Trockner**
Process and plant for drying lignite in a fluidised-bed dryer
Procédé et installation pour sécher du lignite dans un sécheur à lit fluidisé

(30) Priorität: 31.12.1986 DE 3644806; 28.07.1987 DE 3724960
(43) Veröffentlichungstag der Anmeldung: 06.07.1988
(73) Patentinhaber: Rheinbraun Aktiengesellschaft, 50935 Köln (DE)
(72) Erfinder: Klutz, Hans-Joachim, Dipl.-Ing., D-5042 Erftstadt-Lechenich (DE)
(74) Vertreter: Koepsell, Helmut, Dipl.-Ing.

(56) Entgegenhaltungen:
- EP-A- 0 064 617
- WO-A-83/00547
- AU-B- 8 291 782
- CH-A- 95 364
- DE-A- 3 613 305
- FR-A- 2 441 813
- GB-A- 2 083 190
- GB-A- 2 135 034
- US-A- 3 654 705

## Beschreibung

Die Erfindung betrifft ein Verfahren sowie eine Anlage zum Trocknen von Rohbraunkohle unter Verwendung eines Wirbelbett-Trockners gemäß dem Oberbegriff des Anspruches 1 bzw. dem des Anspruches 3.

Ein Verfahren sowie eine Anlage zum Trocknen von Braunkohle sind bereits aus der DE-A-36 13 305 bekannt. Auch bei diesem bekannten Verfahren wird die beim Trocknen der Braunkohle für das Verdampfen des auszutreibenden Wassers aufzuwendende Verdampfungswärme durch Kondensation des Dampfes zurückgewonnen. Dabei wird durch Verdichten einer Teilmenge des verdampften Wassers, also der Brüden, zusätzlich Energie zugeführt.

Diese Verfahrensweise wird auch bei der in der GB-A-2135034 offenbarten Anlage zum Trocknen von Schüttgütern angewendet, wobei jedoch kein Wirbelbett-Trockner eingesetzt wird. Braunkohle wäre mit der in dieser Vorveröffentlichung beschriebenen Anlage nicht zu trocknen. Darüber hinaus fehlt es auch hier an einer Optimierung der Verfahrensführung, die insbesondere die Tatsache berücksichtigt, daß für ein wirtschaftliche Durchführung eines derartigen Trocknungsverfahrens mit geringen Dampfdrücken gearbeitet werden muß, um die für die Verdichtung aufzuwendende elektrische Energie möglichst gering zu halten. Dies hat zur Folge, daß die für den Trocknungsvorgang verfügbare Temperaturdifferenz verhältnismäßig klein ist.

Die der Erfindung zugrunde liegende Aufgabe besteht darin, das Verfahren gemäß dem Oberbegriff des Anspruches 1 bzw. die Anlage gemäß dem Oberbegriff des Anspruches 3 so abzuwandeln, daß die Möglichkeit besteht, die für die Trocknung der Braunkohle erforderliche Dampfmenge an die jeweiligen Erfordernisse anzupassen derart, daß Verfahren und Anlage auch ohne Zufuhr von Fremddampf betrieben werden können, wobei ferner angestrebt wird, den Energiebedarf für das Verfahren so gering wie möglich zu halten, da ein sparsamer Energieverbrauch für die wirtschaftliche Anwendung dieses Verfahrens von entscheidender Bedeutung sein kann.

Diese Aufgabe wird mit den Merkmalen im Kennzeichen des Anspruches 1 bzw. im Kennzeichen des Anspruches 3 gelöst.

Der durch Entspannen des Kondensats zusätzlich gewonnene Dampf trägt dazu bei, möglichst viel Dampf verfügbar zu machen, um ggf. ohne Fremddampf arbeiten zu können. Die Dampfmenge wird ferner durch das in den Brüdenstrom eingespritzte Kondensat vergrößert. Die Innenreinigung der Wärmetauscher-Einbauten dient dazu, im Wärmetauscher bezüglich des Wärmedurchgangs optimale Voraussetzungen zu erreichen bzw. aufrechtzuerhalten, da im anderen Fall die aus wirtschaftlichen Gründen einzuhaltenden Temperaturdifferenzen nicht ausreichen würden, den gewünschten Trocknungseffekt zu erzielen. Bei der Innenreinigung handelt es sich im wesentlichen darum, Feststoffteilchen aus den Brüden, die sich an den Innenflächen der Wärmetauscherrohre absetzen und eine Verschlechterung des Wärmedurchgangs bewirken, zu entfernen.

Ein wesentlicher Vorteil der Lehre gemäß der Erfindung besteht darin, daß sowohl die gesamte Kondensationsenthalpie als auch ein wesentlicher Anteil der fühlbaren Wärme des Brüdenkondensats bis auf einen regelungstechnisch erforderlichen Brüdenüberschuss wieder in den Trocknungsprozeß eingeführt werden. Durch den im wesentlichen geschlossenen Brüdenkreislauf und die weitgehende Nutzung der Exergie der Trocknungsbrüden und des Brüdenkondensats zeichnen sich Verfahren und Anlage gemäß der Erfindung durch eine vorteilhafte Wärmebilanz aus.

Es wird nur die Brüdenmenge in die Atmosphäre gegeben, die als Überschuss im Brüdenkreislauf nicht mehr benötigt wird. Da diese Menge vergleichsweise klein ist, zeichnet sich das Verfahren auch durch Umweltfreundlichkeit aus. Die energiesparende Trocknung in Verbindung mit dem vergleichsweise geringen anlagetechnischen Aufwand führt zu einer merklichen Verbesserung der Wirtschaftlichkeit im Vergleich zu bekannten Trocknungsverfahren.

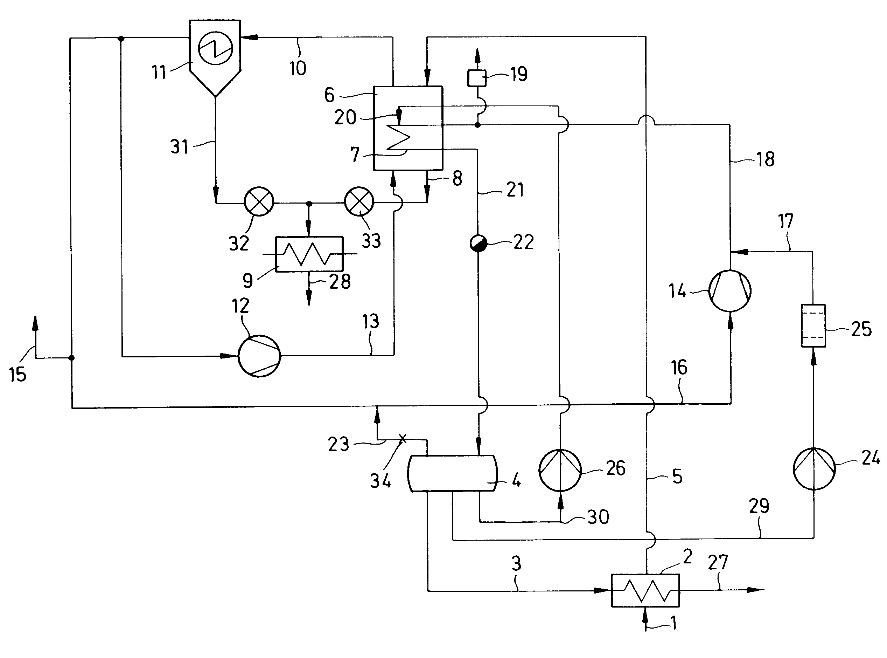

Im folgenden werden Verfahren und Anlage gemäß der Erfindung anhand eines in der Zeichnung dargestellten Ausführungsbeispiels näher beschrieben. Die einzige Figur zeigt das Schema einer Anlage zur Trocknung von Rohbraunkohle mit einem Wirbelbett-Trockner. In diese Anlage wird grubenfeuchte, vorzerkleinerte Rohbraunkohle 1 einem Wärmetauscher 2 zugeführt. Letzterer kann z. B. als beheizter Schwingapparat ausgebildet sein, in welchem die Rohbraunkohle 1 über indirekten Wärmeaustausch durch heißes Brüdenkondensat 3, das aus einem Entspannungsbehälter 4 abgezogen wird, vorgewärmt wird. Die Temperatur des heißen Brüdenkondensats 3 beträgt beispielswise 111° C. Die mit einer Temperatur von etwa 15° C eingeführte Rohbraunkohle 1 wird innerhalb des Wärmetauschers 2 auf eine Temperatur von etwa 65° C gebracht, während sich das heiße Brüdenkondensat 3 in kühles Brüdenkondensat 27 von ungefähr 40° C abkühlt.

Die Vorwärmung der Rohbraunkhle ist für die gesamte Wärmebilanz des Verfahrens besonders wichtig. Die vorgewärmte Rohbraunkohle 5 wird anschließend kontinuierlich einem Wirbelbett-Trockner 6 zugeführt. Die zur Trocknung erforderliche Energie wird über im Wirbelbett-Trockner 6 eingebaute Wärmetauscher-Einbauten 7 eingebracht. Die Fluidisierung der Kohle erfolgt durch ein Wirbelmedium, welches als Teilstrom 13 aus den den Wirbelbett-Trockner 6 verlassenden Brüden 10 hinter einem Elektrofilter 11 abgezweigt wird.

Die auf die gewünschte Restfeuchte getrocknete Braunkohle 8 wird über eine Zellenradschleuse 33 ausgetragen und anschließend in einer Kühlstufe 9 auf ein niedrigeres, für die weitere Verwendung geeignetes Temperaturniveau abgekühlt. Die Temperatur der für die Veredelung geeigneten getrockneten Braunkohle 28 liegt unterhalb von 60° C; ihr Wassergehalt kann 8 - 22%, insbesondere 12 - 20% getragen.

Die während der Trocknung der vorgewärmten Rohbraunkohle 5 im Wirbelbett-Trockner 6 ausgetriebenen und mit Feststoffpartikeln beladenen Brüden 10 werden in einem Elektrofilter 11 gereinigt. Der dabei abgeschiedene Braunkohlenstaub 31 wird ebenfalls über ein geeignetes Austragsorgan 32 aus dem Elektrofilter 11 abgezogen und zusammen mit der getrockneten Braunkohle 8 der Kühlstufe 9 zugeführt, um nach der Abkühlung auf eine Temperatur von weniger als 60° C Verarbeitungstemperatur als Produkt 28 abgegeben zu werden.

Die Brüden 10 verlassen den Elektrofilter 11 im Zustand von ca. 1 bar bei ungefähr 100° C. Sie werden in zwei Teilströme 13 und 16 aufgeteilt. Der kleinere Teilstrom 13 wird über ein Kreislaufgebläse 12 als Wirbelmedium in den Wirbelbett-Trockner 6 zurückgeführt. Der größere Teilstrom 16 der dampfförmigen Brüden wird von einem Verdichter 14 angesaugt und dort in mehreren Stufen zum Heizmedium 18 verdichtet. Dieses Heizmedium 18 hat einen Zustand von ca. 5 bar bei ca. 152° C. Es liegt als Sattdampf vor. Der sich normalerweise im statinären Betrieb einstellende Brüdenüberschuß wird über eine Saugdruckregelung 15 an die Atmosphäre abgegeben. Über diese Saugdruckregelung 15 können unterschiedliche Drücke in der Zweigleitung 16 auf der Saugseite des Brüdenverdichters 14 eingestellt werden.

Der Brüdenverdichter 14 verdichtet die von ihm über die Zweigleitung 16 angesaugten Brüden auf den Zustand des Heizmediums 18. Zweckmäßig ist der Brüdenverdichter 14 als mehrstufiger Turboverdichter ausgebildet. Zwischen den einzelnen Verdichterstufen dieses mehrstufigen Turboverdichters 14 wird flüssiges Kondensat 17 in die Brüden eingsepritzt, welches über eine Zweigleitung 29 aus dem Entspannungsbehälter 4 abgezweigt, von einer Pumpe 24 gefördert und vor der Einspritzung 17 über einen Feinfilter 25 geführt wird. Die Einspritzung 17 erfolgt in der Weise, daß wenigstens hinter dem Turboverdichter 14, vorzugsweise jedoch hinter jeder einzelnen Verdichtungsstufe desselben, flüssiges Brüdenkondensat 17 eingespritzt wird.

Mit der Einspritzung des Brüdenkondensats 17 wird der Sattdampfzustand des Heizmediums 18, d. h., der verdichteten Brüden eingestellt und eine Überhitzung derselben durch die ihnen über den Turboverdichter 14 zugeführte Energie vermieden.

Die verdichteten Brüden 18 werden den Wärmetauscher-Einbauten 7 des Wirbelbett-Trockners 6 zugeleitet. Inerte Bestandteile der verdichteten Brüden, beispielsweise nicht-kondensierbare Gase, werden vom Heizmedium abgetrennt und über eine Entlüftungseinrichtung 19 abgeleitet.

Zusätzlich sind die Wärmetauscher-Einbauten 7 mit Einspritzdüsen 20 vesehen, die eine Innenreinigung der Konaktflächen der Wärmeauscher-Einbauten 7 während des Betriebs ermöglichen, wobei diese Innenreinigung durch die Einspritzung 20 von Brüdenkondensat 30 erzielt wird. Dieses Brüdenkondensat 30 wird über eine weitere Zweigleitung aus dem Entspannungsbehälter 4 abgezweigt und von einer Pumpe 26 gefördert.

Während der Trocknung der vorgewärmten Rohbraunkohle 5 kondensieren die verdichteten Brüden 18 und geben ihre Kondensationswärme an die zu trocknende Braunkohle 5 ab. Das Brüdenkondensat 21 hat einen Druck von ungefähr 5 bar. Es wird über einen Kondensomaten 22 geleitet, wobei der Druck auf 1,5 bar reduziert wird. Infolge der Druckreduzierung tritt bei den kondensierten Brüden 21 eine Nachverdampfung ein. Das dabei entstehende Zweiphasengemisch aus Dampf und Wasser wird in einen Entspannungsehälter 4 geführt, in welchem eine Phasentrennung in Dampf und Flüssigkeit stattfindet. Die Brüdendämpfe werden aus dem Entspannungsbehälter 4 über eine Zweigleitung 23 und ein Druckhalteventil 34 in die Zweigleitung 16 zurückgeführt, aus welcher der Brüdenverdichter 14 das dampfförmige Heizmedium ansaugt.

Die Entspannung des Brüdenkondensats 21 im Behälter 4 ist für das Trocknungsverfahren besonders wichtig. Die durch die Entspannung bewirkte Nachverdampfung liefert einen wesentlichen Beitrag dazu, daß die Brüdenbilanz innerhalb der Trocknungsprozesses positiv gestaltet und somit dieser unabhängig von einer externen Dampfzufuhr wird. Durch die Einspeisung 23 der ausgedampften Brüden in den Brüdenkreislauf 16 wird ein Teil der Exergie des Brüdenkondensats 21 dem Trocknungsprozeß wieder unmittelbar zugeführt.

Bei Anwendung des erfindungsgemäßen Trocknungsverfahrens können beispielswise folgende Werte erzielt werden:
55 t/h Rohbraunkohle 1 mit einer Feuchtigkeit von 60% werden innerhalb des Wärmetauschers 2 von einer Ausgangstemperatur von 15° C auf eine Temperatur von 65° C erwärmt. Dies geschieht mit Hilfe von heißem Brüdenkondensat 3, welches bei der vorstehend beschriebenen Erwärmung der Rohbraunkohle von einer Temperatur von etwa 111° C auf eine Temperatur von ca. 40° C abgekühlt wird, bevor es die Trocknungsanlage verläßt.

Die innerhalb des Wirbelbett-Trockners 6 getrocknete Rohbraunkohle 8 wird in der Kühlstufe 9 auf eine Temperatur abgekühlt, die niedriger als 60° ist. Durch das Verdampfen des in der Rohbraunkohle enthaltenen Wassers als Brüden 10 innerhalb des Wirbelbett-Trockners 6 und nach Abscheiden des in den Brüden 10 enthaltenen Braunkohlenstaubs 31 sowie Zusammenführen des Braunkohlenstaubs 31 mit der getrockneten Braunkohle 8 vor der Kühlstufe 9 werden 25 t/h getrocknete Kohle 28 mit 12% Feuchtigkeit erhalten.

Die Brüden verlassen den Elektrofilter 11 mit einer Temperatur von ca. 100° C bei einem Druck von ca. 1 bar. Der als Wirbelmedium 13 abgezweigte Teilstrom wird im Brüdenkreislaufgebläse 12 auf etwa 1,2 bar verdichtet. Dazu ist am Gebläse 12 eine Antriebsleistung von 263 kW erforderlich. Von dem zweiten Teilstrom 16 werden über die Saugdruckregelung 15 ungefähr 1,9 t/h (ohne Berücksichtigung einer kleinen Verlustmenge) Brüden an die Atmosphäre abgegeben. 2,8 t/h Brüdendämpfe werden über die Zweigleitung 23 aus dem Brüdenentspannungsbehälter 4 zugeführt, so daß sich eine Menge an Brüdendampf 16 von etwa 32,8 t/h ergibt, welche vom Brüdenverdichter 14 angesaugt wird. Unter Zufuhr einer elektrischen Leistung von 3560 kW innerhalb des Verdichters 14 und unter Einspritzung 17 von 4,5 t/h Kondensat werden 35,4 t/h verdichtete Brüden 18 erzeugt, die als Sattdampf bei ca. 152° C und einem Druck von ca. 5 bar vorliegen. Innerhalb des Wärmetauschers 7 kondensieren die verdichteten Brüden 18 unter Abgabe ihrer Kondensationswärme an die vorgewärmte Rohbraunkohle 5. Mit einem Druck von 5 bar werden die kondensierten Brüden 21 über den Kondensomaten 22 geleitet, wobei der Druck auf 1,5 bar reduziert wird. Innerhalb des Entspannungsbehälters 4 liegen schließlich Brüden und Brüdenkondensat im Zustand von 1,5 bar und bei 111° C vor.

Über die Zweigleitung 29 werden aus dem Entspannungsbehälter 4 4,5 t/h flüssiges Brüdenkondensat 29 abgezogen und unter Zufuhr einer Leistung von ca. 2 kw über die Pumpe 24 zur Kondensateinspritzung 17 gefördert.

## Patentansprüche

1. Verfahren zum Trocknen von zumindest vorgebrochener Rohbraunkohle in einem Wirbelbett-Trockner mit von einem Heizmedium durchströmten Wärmetauscher-Einbauten, die von der Rohbraunkohle unter der Einwirkung eines Wirbelmediums zum Zwecke der Wärmeübertragung berührt werden, wobei zumindest ein Teil des Wassers aus der Rohbraunkohle entfernt und als Brüden aus dem Trockner herausgeführt wird und die Brüden entstaubt werden und eine Teilmenge der entstaubten Brüden als Wirbelmedium in den Wirbelbett-Trockner zurückgeführt und eine andere Teilmenge der entstaubten Brüden verdichtet und als Heizmedium durch die Wärmetauscher-Einbauten geführt und darin kondensiert wird und zumindest ein Teil des Kondensats zur Vorwärmung der zu trocknenden Braunkohle verwendet wird, dadurch gekennzeichnet, daß das Kondensat zur Druckreduzierung über einen Kondensomaten in einen Entspannungsbehälter geführt wird und zumindest ein Teil des dabei entstehenden Dampfes in den zu verdichtenden Brüden-Teilmengenstrom eingeleitet und ein Teil des Kondensats unter Druck hinter dem Verdichter bzw. zwischen den einzelnen Verdichterstufen in das Heizmedium eingespritzt wird zur Vermeidung der Überhitzung der verdichteten Brüden und ein Teil des Kondensats unter Druck zur Innenreinigung an wenigstens einer Stelle in die Wärmetauscher-Einbauten eingespritzt wird.

2. Verfahren nach Anspruch 1, dadurch gekennzeichnet, daß das Kondensat nach Druckerhöhung mit einer Pumpe durch ein Feinfilter geleitet wird.

3. Anlage zum Trocknen von Rohbraunkohle, die einen Wirbelbett-Trockner mit von einem Heizmedium durchströmten Wärmetauscher-Einbauten zur Übertragung von Wärme auf die Rohbraunkohle sowie eine Einrichtung zum Entstauben der Brüden aufweist, wobei der Brüdenausgang der Entstaubungseinrichtung (11) zum einen unter Zwischenschaltung eines Gebläses (12) mit dem das Wirbelbett enthaltenden Bereich des Wirbelbett-Trockners (6) und zum anderen unter Zwischenschaltung eines Verdichters (14) mit den Wärmetauscher-Einbauten (7) verbunden ist, dadurch gekennzeichnet, daß der Ausgang der Wärmetauscher-Einbauten (7) über einen Kondensomaten (22) mit einem Entspannungsbehälter (4) verbunden ist, der einerseits zur Ableitung von Brüdendämpfen über eine Zweigleitung (23) in Strömungsrichtung vor dem Verdichter (14) mit der letzteren enthaltenden Leitung (16) verbunden ist und andererseits zum Vorwärmen der Braunkohle in einem Wärmetauscher (2) über eine Zweigleitung (3) zur Ableitung von Kondensat mit dem Wärmetauscher (2) verbunden ist, und der Entspannungsbehälter (4) weiterhin über eine Zweigleitung (29), in welcher eine Pumpe (24) für Kondensat angeordnet ist, in Strömungsrichtung des Heizmediums hinter dem Verdichter (14) bzw. hinter zumindest einer von wenigstens zwei den Verdichter (14) bildenden Verdichtungsstufen zur Einspritzung von Kondensat in die verdichteten Brüden mit der Leitung (18) verbunden ist, über die das Heizmedium in die Wärmetauscher-Einbauten (7) geführt wird, und der Entspannungsbehälter (4) weiterhin über eine Zweigleitung (30), in welcher eine Pumpe (26) angeordnet ist, mit den Wärmetauscher-Einbauten (7) verbunden ist.

4. Anlage nach Anspruch 3, dadurch gekennzeichnet, daß in Strömungsrichtung hinter der Pumpe (24) in der Leitung (29) für das Einspritzen von Kondensat in die zu den Wärmetauscher-Einbauten (7) führende Leitung (18) für das Heizmedium ein Feinfilter (25) angeordnet ist.

5. Anlage nach Anspruch 3, dadurch gekennzeichnet, daß hinter dem Verdichter (14) eine Entlüftungseinrichtung (19) zum Ableiten der inerten, insbesondere nicht-kondensierbaren Bestandteile des Heizmediums vorgesehen ist.

## Claims

1. A process for drying at least pre-broken rough lignite in a fluidised bed drier having heat exchanger installation members through which flows a heating medium and which are contacted by the rough lignite under the action of a fluidisation agent for the purposes of heat transfer, wherein at least a part of the water is removed from the rough lignite and discharged in the form of vapours from the drier and dust is removed from the vapours and a portion of the vapours from which dust has been removed is returned as a fluidisation agent into the fluidised bed drier and another portion of the vapours from which dust has been removed is compressed and passed as a heating medium through the heat exchanger installation members and is condensed therein and at least a part of the condensate is used for pre-heating of the lignite to be dried, characterised in that the condensate is passed for the purposes of pressure reduction by way of a condensomat into a pressure relief vessel and at least a part of the vapour which is produced in that situation is introduced into the vapour flow portion to be compressed and a part of the condensate is injected into the heating medium under pressure downstream of the compressor or between the individual compressor stages to avoid overheating of the compressed vapours and a part of the condensate is injected into the heat exchanger installation members under pressure for internal cleaning at at least one location.

2. A process according to claim 1 characterised in that the condensate is passed through a fine filter after an increase in pressure by means of a pump.

3. Apparatus for drying rough lignite which has a fluidised bed drier with heat exchanger installation members through which a heating member flows for the transfer of heat to the rough lignite, and a means for removing dust from the vapours, wherein the vapour outlet of the dust removal means (11) is connected on the one hand by way of an interposed fan (12) to the region of the fluidised bed drier ( 6) which contains the fluidised bed, and on the other hand by way of an interposed compressor (14) to the heat exchanger installation members (7), characterised in that the outlet of the heat exchanger installation members (7) is connected by way of a condensomat (22) to a pressure relief vessel (4) which on the one hand is connected to the conduit (16) containing the compressor (14) to discharge vapours by way of a branch conduit (23) upstream of the compressor (14) in the flow direction and which on the other hand for preheating of the lignite in a heat exchanger (2) is connected to the heat exchanger (2) by way of a branch conduit (3) for discharging condensate, and the pressure relief vessel (4) is further connected by way of a branch conduit (29) in which a pump (24) for condensate is disposed, in the direction of flow of the heating medium downstream of the compressor (14) or downstream of at least one of at least two compressor stages forming the compressor (14), for the injection of condensate into the compressed vapours, to the conduit (18) by way of which the heating medium is passed into the heat exchanger installation members (7), and the pressure relief vessel (4) is further connected to the heat exchanger installation members (7) by way of a branch conduit (30) in which a pump (26) is disposed.

4. Apparatus according to claim 3 characterised in that a fine filter (25) is arranged downstream of the pump (24) in the direction of flow in the conduit (29) for the injection of condensate into the conduit (18) which goes to the heat exchanger installation members (7), for the heating medium.

5. Apparatus according to claim 3 characterised in that disposed downstream of the compressor (14) is a vent means (19) for discharging the inert and in particular non-condensable constituents of the heating medium.

## Revendications

1. Procédé pour sécher du lignite brut préalablement traité au moins par broyage, en opérant dans un séchoir à lit fluidisé pourvu d'échangeurs thermiques incorporés traversés par un fluide de chauffage, le lignite brut venant au contact de ces échangeurs sous l'effet d'un fluide d'agitation afin d'assurer le transfert thermique, au moins une partie de l'eau du lignite brut étant extraite de celui-ci et évacuée hors du séchoir sous forme de vapeurs, qui sont dépoussiérées et réintroduites en partie dans le séchoir à lit fluidisé où elles servent de fluide d'agitation, tandis qu'une autre partie des vapeurs dépoussiérées subit une compression pour être envoyée à travers les échangeurs thermiques incorporés comme fluide de chauffage et s'y trouver condensée, et au moins une partie du condensat servant au préchauffage du lignite brut à sécher, caractérisé en ce qu'on envoie le condensat à travers un condenseur dans un récipient de détente pour en réduire la pression, et en ce qu'on introduit la vapeur ainsi produite, au moins en partie, dans le courant partiel des vapeurs à comprimer, tandis qu'on injecte sous pression dans le fluide de chauffage une partie du condensat en aval du compresseur, ou entre les étages de celui-ci, pour éviter la surchauffe des vapeurs comprimées, et qu'on injecte sous pression une partie du condensat dans les échangeurs thermiques incorporés, au moins en un endroit, pour assurer un nettoyage interne.

2. Procédé selon la revendication 1, caractérisé en ce qu'on fait passer le condensat à travers un filtre fin après en avoir augmenté la pression au moyen d'une pompe.

3. Installation pour sécher du lignite brut, comportant un séchoir à lit fluidisé pourvu d'échangeurs thermiques incorporés traversés par un fluide de chauffage pour assurer le transfert thermique sur le lignite, et un système de dépoussiérage des vapeurs produites, la sortie des vapeurs du système de dépoussiérage (11) étant d'une part reliée par l'intermédiaire d'une soufflante (12) à la zone du séchoir à lit fluidisé (6) qui contient le lit fluidisé, et d'autre part reliée par l'intermédiaire d'un compresseur (14) aux échangeurs thermiques incorporés (7), caractérisée en ce que la sortie des échangeurs thermiques (7) est reliée à un récipient de détente (4) par l'intermédiaire d'un condenseur (22), le récipient de détente (4) étant d'une part relié à la canalisation (16) d'alimentation du compresseur (14) par une dérivation (23), pour évacuer les vapeurs produites, et d'autre part, pour assurer le réchauffage préalable du lignite dans un échangeur de réchauffage (2), relié à cet échangeur de réchauffage (2) par une dérivation (3) assurant le passage du condensat, le récipient de détente (4) étant en outre relié, par une dérivation (29) sur laquelle est disposée une pompe (24) pour le condensat, à un point de raccordement situé sur la canalisation (18) en aval du compresseur (14) dans le sens de l'écoulement du fluide de chauffage, ou en aval d'au moins l'un des deux étages de ce compresseur (14), afin d'injecter le condensat dans les vapeurs comprimées, cette canalisation (18) assurant l'arrivée du fluide de chauffage dans les échangeurs thermiques incorporés (7) et le récipient de détente (4) étant aussi relié aux échangeurs thermiques incorporés (7) par une dérivation (30) sur laquelle est montée une pompe (26).

4. Installation selon la revendication 3, caractérisée en ce qu'elle comporte pour filtrer le fluide de chauffage, un filtre fin (25) monté sur la canalisation (29) en aval de la pompe (24), dans le sens de l'écoulement, cette canalisation (29) servant à injecter le condensat dans la canalisation (18) qui alimente les échangeurs thermiques incorporés (7).

5. Installation selon la revendication 3, caractérisée en ce qu'elle comporte un appareil de dégazage (19), monté en aval du compresseur (14), pour assurer l'évacuation des composants inertes du fluide de chauffage, et en particulier des composants non condensables de celui-ci.
